# EUROPEAN PATENT SPECIFICATION

(11) **EP 0 597 859 B1**
(45) Date of publication and mention of the grant of the patent: **22.05.1996**
(21) Application number: 92906376.6
(22) Date of filing: 28.02.1992
(51) Int. Cl.: F28F 1/16, B21C 37/22, B23K 20/04

(54) **HEAT EXCHANGING ELEMENT AND METHOD FOR THE MANUFACTURE THEREOF**
WÄRMETAUSCHGLIED SOWIE VERFAHREN ZUR HERSTELLUNG DESSELBEN
ELEMENT D'ECHANGE DE CHALEUR ET PROCEDE DE FABRICATION

(30) Priority: 16.08.1991 SE 9100605
(43) Date of publication of application: 25.05.1994
(73) Proprietor: OLSSON, Göran, DK-4640 Fakse (DK)
(72) Inventor: OLSSON, Göran, DK-4640 Fakse (DK)
(74) Representative: Karlsson, Leif Karl Gunnar
(86) International application number: SE9200125
(87) International publication number: WO9304331

(56) References cited:
- SE-B- 423 150
- SE-B- 430 434
- US-A- 2 828 533
- PATENT ABSTRACTS OF JAPAN, Vol. 8, No. 166, M314; & JP,A,59 060 194, publ 1984-04-06 (NIHON ARUMINIUMU KOGYO K.K.)
- PATENT ABSTRACTS OF JAPAN, Vol. 7, No. 112, M215; & JP,A,58 032 535, publ 1983-02-25 (MITSUBISHI KEIKINZOKU KOGYO K.K.)
- PATENT ABSTRACTS OF JAPAN, Vol. 12, No. 371, M748; & JP,A,63 123 583, publ 1988-05-27 (TANAKA KIKINZOKU KOGYO K.K.)

## Description

### Technical Field

The present invention relates to a heat-exchanger element comprising a metal layer and at least one metal conduit which extends between two mutually opposing outer edges of the element and lies against and is fused together with the metal layer, so that the metal layer will form heat-transporting flanges on opposite sides of the conduit. The heat-exchanger element is particularly intended for use as an absorber in solar energy devices, but may also be used for other purposes, such as radiators in domestic heating systems or in other air-water heat-exchanging applications.

### Background Art

A heat-exchanger element which consists of two aluminium bands which are cold-fused with a copper conduit placed therebetween is known from Swedish published specification 423,150 and Danish published specification 155,298. One advantage of such a heat-exchanger element lies in the small thermal mass of the element, which is due to the use of thin aluminium bands and also to the high resistance of said elements to corrosion, which in turn is due to the fact that the conduit through which the hot medium flows is made of copper. In manufacture, the copper conduit can be given the wall thickness required to resist the pressure and the corrosive effect generated by the heat-carrying medium. Although a heat-exchanging element of this kind will normally function satisfactorily, the fact that grooved rolls must be used in order to compensate for the wall thickness of the copper conduit, axial guiding of the rolls and also guiding of the flattened copper conduit into the roll grooves is highly demanding. When guiding of the rolls and the flattened copper conduit is deficient in some respect, the conduit will creep out of the grooves on the flat or smooth part of the rolls, and the copper conduit will crack as a result of being excessively reduced.

The manufacture of heat-exchanger elements in accordance with the Swedish and the Danish patent specifications incurs high investment costs in the construction of the rolling mill and results in a low roll speed in production, since it is necessary to continuously check the guidance between the grooves of the rolls and the copper conduit through the roll grooves. Furthermore, there is a risk that the manufactured heat-exchanger element will have a poor quality, which is first manifested after the element has been finally installed or fitted on the premises of the customer.

As before mentioned, the heat-exchanger element according to the Swedish published specification 423,150 and the Danish published specification 155,298 are comprised of two metal layers located on opposite sides of the conduit. Thus, two metal bands must be handled and guided during their passage through the rolls, which is a time-consuming and relatively complicated procedure. Furthermore, it is necessary to mechanically work both metal layers in order to enable collecting pipes to be connected to the conduit enclosed between the metal layers.

JPA 59-60194 relates to a heat-exchanging element which corresponds to the element taught by the aforedescribed Swedish published specification, this known element also having conduit ends which project outwardly from the two metal layers.

USA 2,828,533 teaches a method of fusing metal layers and metal conduits together with the aid of smooth rolls, so as to form a heat-exchanger element. Subsequent to this fusion operation, the element has a uniform thickness over the whole of its extension. This is achieved by reducing the layer thickness in the region of the conduit to a greater extent than in the neighbouring regions. As a result of this greater reduction in layer thickness, the layer, or layers, and the conduit are extended to different extents in the direction in which they are fed through the rolls, causing the element to rupture at the interface or junction between layer and conduit.

JPA 58-32535 teaches a heat-exchanger element comprising a metal layer which is formed partially around a conduit and connected thereto by adhesion.

### Summary of the Invention

An object of the present invention is to avoid at least partially the drawbacks of earlier known heat-exchanger elements and also to avoid the drawbacks of methods for their manufacture.

This object is fulfilled by means of the present invention, which is characterized by the features set forth in the characterizing clauses of the following Claims.

### Brief Description of the Drawings

Figure 1 is a cross-sectional view of a first embodiment of an inventive heat-exchanger element, and also illustrates a roll pair in which the element is manufactured;
Figure 2 is a cross-sectional view of a second embodiment of an inventive element, and also shows a roll pair for manufacturing the element;
Figure 3 is a cross-sectional view of the element shown in Figure 1 or 2 subsequent to manufacture and after inflating the conduit; and
Figure 4 is a schematic illustration from above of the element shown in Figure 3 connected to a collecting pipe.

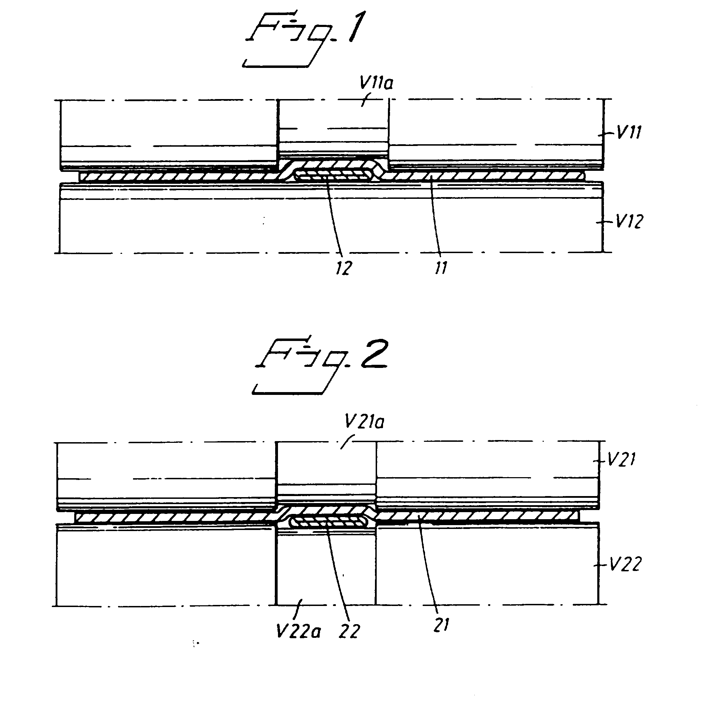

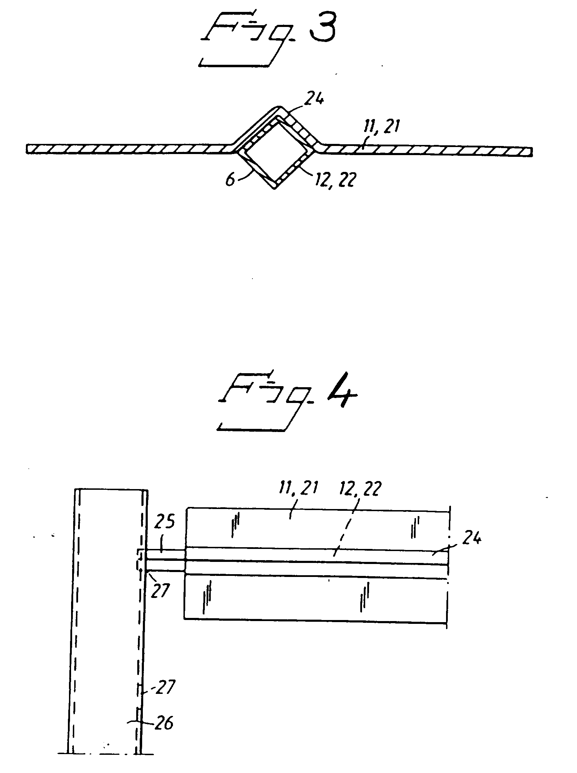

Figures 1 and 2 illustrate rolling of different heat-exchanger elements, while Figure 3 illustrates a completed element. The elements illustrated are comprised of one metal layer, such as an aluminium layer, and at least one metal conduit, such as a copper conduit. It will be understood, however, that other materials may be used, such as copper for the metal layer and aluminium for the conduit. The conduit extends between two mutually opposing outer edges of the element, so that the metal layer or layers will form heat-transporting flanges having a wide surface area and a small wall thickness on opposite sides of the conduit.

Prior to rolling, the conduit is flattened and then subjected to a recrystallizing annealing process to return the conduit to the same ductile state as that possessed by the conduit prior to being flattened.

Before rolling is commenced, those surfaces on the metal layer and the flattened and annealed conduit that are to be mutually joined are brushed mechanically.

Figure 1 illustrates a metal band 11, a flattened conduit 12, and two rolls V11 and V12, of which the upper roll V11 has a peripherally extending groove V11a. The distance between the bottom of the groove V11a and the other roll V12 corresponds essentially to the total thickness of the rolled element in the immediate vicinity of the conduit 12. The width of the groove V11a is slightly larger than the sum of the width of the conduit 12 and twice the thickness of the band 11. The band 11 and the conduit 12 are brought together in front of the rolls V11 and V12 and rolled. Because of the presence of the groove V11a, it is necessary to guide the rolls V11 and V12 axially. After having passed through the rolls, a total reduction in the thickness of the rolled metal band of at least about 65% has been achieved, thereby ensuring satisfactory metallurgical connection (fusion) between band and conduit. The band 11 will have a thickness of about 0.5 mm across its entire width and the conduit 12 will have a wall thickness of about 0.3 mm.

Figure 2 illustrates a metal band 21, a flattened conduit 22 and two rolls V21 and V22. Both of the rolls V21 and V22 are provided with peripheral grooves V21a and V22a respectively. The distance between the bottoms of the grooves V21a and V22a corresponds essentially to the total thickness of the rolled element in the near vicinity of the conduit. The grooves V21a and V22a have mutually the same width, which is somewhat larger than the sum of the width of the conduit 22 and twice the thickness of the band 21. The band 21 and the conduit 22 are rolled essentially in the same manner as that described above with reference to Figure 1.

Figure 3 illustrates a rolled heat-exchanger element according to Figure 1 or 2, subsequent to having dilated the conduit 12, 22 in a conventional manner, by introducing a suitable pressurized fluid into the conduit. As shown in Figure 3, the conduit has a free surface 6 which is remote from the metal band 11, 21. The element of this embodiment may be used, for instance, as an absorber in solar energy devices, in which several such elements may be joined together and the conduits thereof connected to collecting pipes in which the heat-carrying liquid circulates. The element may also comprise two or more parallel conduits which are fused to a metal band at one and the same time.

Figure 4 is a view from above of the element shown in Figure 3. The metal band 11 or 21 has, at 24, an elongated part in which the conduit 12 or 22 is fixedly mounted. An end-part 25 of the conduit 12 or 22 extends beyond the left edge of the band 11 or 21 and is hard-soldered to a collecting pipe 26 forming part of a solar energy device (not shown). The collecting pipe 26 is provided with a plurality of holes 27 for receiving the conduits of corresponding elements mounted in parallel with the element illustrated in Figure 4. A corresponding collecting pipe (not shown) can be connected to the other end of said elements.

The end-part 25 of the conduit has been laid free from the metal band 11 or 21, by applying a separating agent onto the metal band or the conduit 12 or 22 in that region where the metal band is to be separated from the conduit prior to rolling said element, thereby preventing the conduit and the band from fusing together in this region when passing through the rolls. When cutting the rolled conduit and band to form individual elements, the band, but not the conduit, is further cut to a length corresponding to the length of said end-part. Cutting of solely the band is preferably not carried out until the conduit has been dilated to the form shown in Figure 3.

## Claims

1. A heat-exchanger element comprising a metal layer (11; 21) and at least one metal conduit (12; 22) which lies against the metal layer and which extends between two mutually opposing outer edges of the element so that the metal layer will form heat-transporting flanges on both sides of the conduit, wherein the conduit and the metal layer are metallurgically connected to each other to achieve a total reduction in thickness of the element in a manner such that said conduit will have an exposed surface (6) which faces away from the metal layer, **characterized** in that the metal layer (11; 21) has essentially the same thickness at the conduit (12; 22) as at the flanges.

2. A heat-exchanger element according to Claim 1, **characterized** in that the element has a total thickness at the conduit (12; 22) which is greater than the thickness of the metal layer (11; 21).

3. A method of producing a heat-exchanger element comprising a metal layer (11; 21) and at least one metal conduit (12; 22) which lies against said metal layer and which extends between two mutually opposing outer edges of the element so that the metal layer forms heat-transporting flanges on opposite sides of the conduit, said method comprising feeding the metal layer and the flattened conduit between two rolls (V11, V12; V21, V22) with a part of the conduit and one surface of the metal layer lying against one roll (V12; V22) and the other surface of said metal layer lying against the other roll (V11; V21) while exerting a roll pressure such as to cold-fuse the metal layer to the conduit, so that the layer and the conduit are metallurgically connected to each other to achieve a total reduction in thickness of the element, **characterized** by feeding the conduit (12; 22) and the metal layer (11; 21) between the two rolls (V11, V12; V21, V22) of which at least one (V11; V21, V22) is provided with a peripheral groove (V11a; V21a, V22a) which accommodates at least a part of the conduit and/or a part of the metal layer.

4. A method according to Claim 3, **characterized** by preferably subjecting the conduit (12; 22) to a recrystallizing annealing process after flat-rolling said conduit; and by brushing the conduit and the metal layer (11; 21) mechanically prior to the rolling process.

5. A method according to Claim 3 or 4, **characterized** by reducing the thickness of the conduit (12; 22) and of the metal layer (11; 21) by at least 65% during passage thereof through the rolls (V11, V12; V21, V22).

## Patentansprüche

1. Wärmeaustauschelement mit einer Metallfläche (11; 21) und wenigstens einem Metalleiter (12; 22), welcher an der Metallfläche anliegt und sich zwischen zwei einander entgegengesetzten äußeren Kanten des Elementes erstreckt, so daß die Metallfläche an beiden Seiten des Leiters wärmeleitende Flansche bildet, wobei der Leiter und die Metallfläche metallurgisch miteinander verbunden sind, um eine Verringerung der Gesamtdicke des Elementes auf solche Weise zu erreichen, daß der Leiter eine freiliegende Oberfläche (6) aufweist, die von der Metallfläche abgewandt ist, dadurch gekennzeichnet, daß die Metallfläche (11; 21) beim Leiter (12; 22) im wesentlichen die gleiche Dicke aufweist wie bei den Flanschen.

2. Wärmeaustauschelement nach Patentanspruch 1, dadurch gekennzeichnet, daß das Element beim Leiter (12; 22) eine Gesamtdicke aufweist, die größer ist als die Dicke der Metallfläche (11; 21).

3. Verfahren zur Herstellung eines Wärmeaustauschelementes mit einer Metallfläche (11; 21) und wenigstens einem Metalleiter (12; 22), welcher an der Metallfläche anliegt und sich zwischen zwei einander entgegengesetzten äußeren Kanten des Elementes erstreckt, so daß die Metallfläche an entgegengesetzten Seiten des Leiters wärmeleitende Flansche bildet, welches Verfahren die Zuführung der Metallfläche sowie des abgeflachten Leiters zwischen zwei Walzen (V11, V12; V21, V22) umfaßt, wobei ein Teil des Leiters sowie die eine Oberfläche der Metallfläche gegen die eine Walze (V12; V22) anliegen und die andere Oberfläche der Metallfläche gegen die andere Walze (V11; V21) anliegt, und wobei auf die Walzen ein Druck ausgeübt wird, um die Metallfläche mit dem Leiter kalt zu verschmelzen, so daß die Fläche und der Leiter metallurgisch miteinander verbunden werden und eine Verringerung der Gesamtdicke des Elementes erreicht wird, gekennzeichnet durch die Zuführung des Leiters (12; 22) sowie der Metallfläche (11; 21) zwischen die beiden Walzen (V11, V12; V21, V22), von denen wenigstens eine (V11; V21, V22) am Umfang mit einer Rille (V11a; V21a, V22a) versehen ist, welche wenigstens einen Teil des Leiters und/oder einen Teil der Metallfläche aufnimmt.

4. Verfahren nach Patentanspruch 3, dadurch gekennzeichnet, daß der Leiter (12; 22) nach dem Flachwalzen vorzugsweise einem rekristallisierenden Glühprozeß unterworfen wird und daß der Leiter sowie die Metallfläche (11; 21) vor dem Walzvorgang mechanisch gebürstet werden.

5. Verfahren nach Patentanspruch 3 oder 4, dadurch gekennzeichnet, daß die Dicke des Leiters (12; 22) sowie der Metallfläche (11; 21) während deren Durchgang zwischen den Walzen (V11, V12; V21, V22) um wenigstens 65 % verringert wird.

## Revendications

1. Élément échangeur de chaleur, comprenant une couche métallique (11; 21) et au moins un conduit métallique (12; 22) qui repose contre la couche métallique et qui s'étend entre deux bords extérieurs mutuellement opposés de l'élément, de sorte que la couche métallique formera des brides de transport de chaleur sur les deux côtés du conduit, dans lequel le conduit et la couche métallique sont reliés par voie métallurgique l'un à l'autre afin d'obtenir une réduction totale de l'épaisseur de l'élément, d'une manière telle que ledit conduit aura une surface à nu (6) qui est opposée à la couche métallique, caractérisé en ce que la couche métallique (11; 21) a essentiellement la même épaisseur au niveau du conduit (12; 22) et au niveau des brides.

2. Élément échangeur de chaleur selon la revendication 1, caractérisé en ce que l'élément a une épaisseur totale au niveau du conduit (12; 22) qui est supérieure à l'épaisseur de la couche métallique (11; 21).

3. Procédé de fabrication d'un élément échangeur de chaleur comprenant une couche métallique (11; 21) et au moins un conduit métallique (12; 22) qui repose contre la couche métallique et qui s'étend entre deux bords extérieurs mutuellement opposés de l'élément, de sorte que la couche métallique forme des brides de transport de chaleur sur des côtés opposés du conduit, ledit procédé comprenant le fait de faire passer la couche métallique et le conduit aplati entre deux rouleaux (V11, V12; V21, V22) avec une partie du conduit et une surface de la couche métallique contre un rouleau (V12; V22) et l'autre surface de ladite couche métallique contre l'autre rouleau (V11; V21), tout en exercant une pression de roulement afin de fusionner à froid la couche métallique au conduit, de sorte que la couche et le conduit sont connectés par voie métallurgique l'un à l'autre afin d'obtenir une réduction totale de l'épaisseur de l'élément, caractérisé par le fait de faire passer le conduit (12; 22) et la couche métallique (11; 21) entre les deux rouleaux (V11, V12; V21, V22), parmi lesquels au moins l'un (V11; V21, V22) est muni d'une rainure périphérique (V11a; V21a, V22a) qui reçoit au moins une partie du conduit et/ou une partie de la couche métallique.

4. Procédé selon la revendication 3, caractérisé par le fait de soumettre de préférence le conduit (12; 22) à un procédé de revenu de recristallisation après le laminage plat dudit conduit ; et par le fait de brosser le conduit et la couche métalogique (11; 21) mécaniquement avant le procédé de laminage.

5. Procédé selon la revendication 3 ou 4, caractérisé par le fait de réduire l'épaisseur du conduit (12; 22) et de la couche métallique (11; 21) d'au moins 65% pendant leur passage à travers les rouleaux (V11, V12; V21, V22).
